# EUROPÄISCHE PATENTANMELDUNG

(11) **EP 1 401 218 A1**
(43) Veröffentlichungstag der Anmeldung: **24.03.2004**
(21) Anmeldenummer: 02256497.5
(22) Anmeldetag: 19.09.2002
(51) Int. Cl.: H04Q 7/22, H04L 12/18

(54) **Verfahren zur Übertragung von Broadcast- und Multicast-Informationen in einem Funkkommunikationssystem**

(71) Anmelder: SIEMENS AKTIENGESELLSCHAFT, 80333 München (DE)
(72) Erfinder: Kroth, Norbert, 14471 Potsdam (DE); Randall, Dave, Romsey, Hants SO51 5SZ (GB); Schniedenharn, Jörg, 13587 Berlin (DE); Vesely, Alexander, 1170 Wien (AT)

(57) **Zusammenfassung**

Verfahren zur Übertragung von Broadcast- und Multicast-Informationen in einem Funkkommunikationssystem mit mindestens einer Funknetzwerkkontrolleinrichtung (RNC), mindestens einer Basisstation (NodeB) und mindestens einer Teilnehmerstation (UEn), wobei die Funknetzwerkkontrolleinrichtung (RNC) mit einer Zugangseinrichtung eines Kernnetzes (CN) verbunden ist, wobei die Nutzinformationen als Dienst mehreren Teilnehmern zur Verfügung gestellt werden, wobei die Teilnehmerstationen dieser Teilnehmer vor der Übertragung der Nutzinformationen des Dienstes benachrichtigt werden. Erfindungsgemäß umfasst die Benachrichtigung (NOTIF-2) an die Teilnehmerstationen (UEn) der Teilnehmer zumindest teilweise eine Aufforderung zu einer Antwort (RESP) und es erfolgt zumindest teilweise die Übertragung der Nutzinformationen nach Eingang der Antwort (RESP).

## Beschreibung

Die Erfindung betrifft ein Verfahren zur Übertragung von von Nutzinformationen in einem Funkkommunikationssystem mit mindestens einer Funknetzwerkkontrolleinrichtung, mindestens einer Basisstation und mindestens eine Teilnehmerstation nach dem Oberbegriff des Anspruchs 1.

Die Erfindung betrifft ferner ein Funkkommunikationssystem nach dem Oberbegriff des Anspruchs 11.

Kommunikationssysteme gewinnen zunehmend an Bedeutung. Es sind starke Bestrebungen vorhanden, kabelgebundene Kommunikationssysteme mit Funkkommunikationssystemen zu verknüpfen. Die entstehenden hybriden Kommunikationssysteme führen zu einer Erhöhung der Zahl der zur Verfügung stehenden Dienste, ermöglichen aber auch eine größere Flexibilität auf Seiten der Kommunikation. Dabei werden Geräte entwickelt, die unterschiedliche Systeme nutzen können (Multi Homing).

Den Funkkommunikationssystemen kommt aufgrund der ermöglichten Mobilität der Teilnehmer eine große Bedeutung zu.

In Funkkommunikationssystemen werden Informationen (beispielsweise Sprache, Bildinformation, Videoinformation, SMS [Short Message Service] oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen.

Für das eingeführte GSM-Mobilfunksystem (Global System for Mobile Communication) werden Frequenzen bei 900, 1800 und 1900 MHz genutzt. Diese Systeme übermitteln im wesentlichen Sprache, Telefax und Kurzmitteilungen SMS (Short Message Service) als auch digitale Daten.

Für zukünftige Mobilfunksysteme mit CDMA- oder TD/CDMA-Übertragungsverfahren, wie beispielsweise UMTS (Universal Mobile Telecommunication System) oder andere Systeme der dritten Generation, sind Frequenzen im Frequenzband von ca. 2000 MHz vorgesehen. Diese Systeme der dritten Generation werden entwickelt mit den Zielen weltweiter Funkabdeckung, einem großen Angebot an Diensten zur Datenübertragung und vor allem eine flexible Verwaltung der Kapazität der Funkschnittstelle, die bei Funk-Kommunikationssystemen die Schnittstelle mit den geringsten Ressourcen ist. Bei diesen Funk-Kommunikationssystemen soll es vor allem durch die flexible Verwaltung der Funkschnittstelle möglich sein, dass einer Teilnehmerstation bei Bedarf eine große Datenmenge mit hoher Datengeschwindigkeit senden und/oder empfangen kann.

Der Zugriff von Stationen auf die gemeinsamen Funkressourcen des Übertragungsmedium, wie zum Beispiel Zeit, Frequenz, Leistung oder Raum, wird bei diesen Funk-Kommunikationssystemen durch Vielfachzugriffsverfahren (Multiple Access, MA) geregelt.

Bei Zeitbereichs-Vielfachzugriffsverfahren (TDMA) wird jedes Sende- und Empfangsfrequenzband in Zeitschlitze unterteilt, wobei ein oder mehrere zyklisch wiederholte Zeitschlitze den Stationen zugeteilt werden. Durch TDMA wird die Funkressource Zeit stationsspezifisch separiert.

Bei Frequenzbereichs-Vielfachzugriffsverfahren (FDMA) wird der gesamte Frequenzbereich in schmalbandige Bereiche unterteilt, wobei ein oder mehrere schmalbandige Frequenzbänder den Stationen zugeteilt werden. Durch FDMA wird die Funkressource Frequenz stationsspezifisch separiert.

Bei Codebereichs-Vielfachzugriffsverfahren (CDMA) wird durch einen Spreizcode, der aus vielen einzelnen sogenannten Chips besteht, die zu übertragende Leistung/Information stationsspezifisch codiert, wodurch die zu übertragende Leistung codebedingt zufällig über einen großen Frequenzbereich gespreizt wird. Die von unterschiedlichen Stationen benutzen Spreizcodes innerhalb einer Zelle/Basisstation sind jeweils gegenseitig orthogonal oder im wesentlichen orthogonal, wodurch ein Empfänger die ihm zugedachte Signalleistung erkennt und andere Signale unterdrückt. Durch CDMA wird die Funkressource Leistung durch Spreizcodes stationsspezifisch separiert.

Bei orthogonalen Frequenz-Vielfachzugriffsverfahren (OFDM) werden die Daten breitbandig übermittelt, wobei das Frequenzband in äquidistante, orthogonale Unterträger eingeteilt wird, so dass die simultane Phasenverschiebung der Unterträger einen zwei-dimensionalen Datenfluss im Zeit-Frequenz Bereich aufspannt. Durch OFDM wird die Funkressource Frequenz mittels orthogonalen Unterträgern stationsspezifisch separiert. Die während einer Zeiteinheit auf den orthogonalen Unterträgern übermittelten zusammengefassten Datensymbole werden als OFDM Symbole bezeichnet.

Die Vielfachzugriffsverfahren können kombiniert werden. So benutzen viele Funkkommunikationssysteme eine Kombination der TDMA und FDMA Verfahren, wobei jedes schmalbandige Frequenzband in Zeitschlitze unterteilt ist.

Für das erwähnte UMTS-Mobilfunksystem wird zwischen einem sogenannten FDD-Modus (Frequency Division Duplex) und einem TDD-Modus (Time Division Duplex) unterschieden. Der TDD-Modus zeichnet sich insbesondere dadurch aus, dass ein gemeinsames Frequenzband sowohl für die Signalübertragung in Aufwärtsrichtung (UL - Uplink) als auch in Abwärtsrichtung (DL-Downlink) genutzt wird, während der FDD-Modus für die beiden Übertragungsrichtungen jeweils ein unterschiedliches Frequenzband nutzt.

In Funkkommunikationsverbindungen der zweiten und/oder dritten Generation können Informationen kanalvermittelt (CS Circuit Switched) oder paketvermittelt (PS Packet Switched) übertragen werden.

Die Verbindung zwischen der mindestens einen Basisstation und der mindestens einen Teilnehmerstation erfolgt über eine Funkkommunikations-Schnittstelle. Die Basisstation kann dabei mehrere Funkzellen bedienen.

Üblicherweise sind die mindestens eine Basisstation und eine Funknetzwerkkontrolleinrichtung (RNC Radio Network Controler) Bestandteile eines Basisstationssubsystems (RNS Radio Network Subsystem). Ein Funkkommunikationssystem umfasst in der Regel mehrere Basisstationssubsysteme, die an ein Kernnetz (CN Core Network) angeschlossen sind. Dabei ist die Funknetzwerkkontrolleinrichtung des Basisstationssubsystems mit einer Zugangseinrichtung (SGSN Serving GPRS Support Node) des Kernnetzes verbunden.

Neben individuellen Nutzinformationen werden in Funkkommunikationssystemen Daten übertragen, die mehreren Benutzern zur Verfügung gestellt werden. Beispielsweise umfassen solche Nutzinformationen Video streams oder andere Broadcast- und/oder Multicast-Informationen. Die Dienste zur Übertragung von Nutzinformationen, welche nicht nur individuell für einen einzigen Teilnehmer vorgesehen sind, sondern mehreren Teilnehmern zur Verfügung gestellt werden, werden unter dem Begriff MBMS (Multimedia Broadcast/Multicast Service) zusammengefasst. Unterschiedliche MBMS-Dienste (Multimedia Broadcast/Multicast Service) werden vom Kernnetz in der Regel als separarte Datenströme bereitgestellt.

Bevor die Nutzinformationen als Dienst mehreren Teilnehmern zur Verfügung gestellt werden, erfolgt eine Benachrichtigung der Teilnehmerstationen der Teilnehmer, welche den Dienst nutzen wollen, vor der eigentlichen Übertragung der Nutzinformationen des Dienstes. Diese Benachrichtigung der Teilnehmerstationen ist notwendig, damit die Empfänger konfiguriert werden können. Je nachdem, in welchem Modus sich die Teilnehmerstationen befinden (z.B. "connected mode'' oder "idle mode"), erfolgt die Benachrichtigung beispielsweise in Form einer "Notification" oder eines "Paging". Üblicherweise werden zur Benachrichtigung gruppenspezifische Mechanismen angewendet, bei denen mehrere Teilnehmerstationen gleichzeitig angesprochen werden.

Die Übertragung von Broadcast/Multicast-Informationen als Dienste sollte vorteilhaft erfolgen. Insbesondere sollte eine vermeidbare Belegung von Funkressourcen möglichst vermieden werden.

Der Erfindung liegt daher die Aufgabe zu Grunde, ein Verfahren und ein Funkkommunikationssystem der eingangs genannten Art aufzuzeigen, welche diese Vorgaben erfüllen.

Die Aufgabe wird für das Verfahren mit den Merkmalen des Anspruchs 1 und für das Funkkommunikationssystem mit den Merkmalen des Anspruchs 11 gelöst.

Vorteilhafte Ausgestaltung und Weiterbildungen sind Gegenstand der abhängigen Ansprüche.

Erfindungsgemäß umfasst die Benachrichtigung an die Teilnehmerstationen der Teilnehmer zumindest teilweise eine Aufforderung zu einer Antwort und die Übertragung der Nutzinformationen erfolgt zumindest teilweise nach Eingang der Antwort.

Die Erfindung geht davon aus, dass in der Regel die Teilnehmerstationen von MBMS-Dienste nutzenden Teilnehmern nicht gleichmäßig im Funknetz verteilt sind. Daher wird es meistens auch Bereiche im Funknetz geben, in welchen eine Übertragung der Nutzinformationen der MBMS-Dienste sich erübrigt, weil ein nutzender Teilnehmer dort nicht vorhanden ist. Wenn also auf eine Aufforderung zu einer Antwort im Rahmen einer Benachrichtigung an die Teilnehmerstationen der Teilnehmer eines MBMS-Dienstes hin netzseitig keine Antwort empfangen wird, unterbleibt zumindet teilweise die Übertragung der Nutzinformationen. Auf dies Weise werden nicht unnötig Funkressourcen belegt.

Die Erfindung nützt aus, dass nicht in allen Funkzellen des Funkkommunikationssystems Teilnehmerstationen von den MBMS-Dienst nutzenden Teilnehmern vorhanden sein müssen. Daher kann grundsätzlich eine unnötige Übertragung von Nutzinformationen in den Funkzellen bzw. Sektoren von Funkzellen vermieden werden, wo nach einer Aufforderung an die Teilnehmerstationen keine entsprechende Antwort erfolgte.

Mit Vorteil erfolgt eine Gruppierung der Teilnehmerstationen zu Gruppen im Hinblick auf die Benachrichtigung. Insbesondere kann an eine Gruppe von Teilnehmerstationen der Teilnehmer eine identische Benachrichtigung gesendet werden. Aufgrund der bereits vorhanden Funknetzarchitektur ist es besonders günstig, wenn die Gruppierung der Teilnehmerstationen anhand deren Zuordnung zu Funkzellen erfolgt. Dann lässt sich die Erfindung besonders einfach in bestehende Systeme einfügen.

Erfindungsgemäß umfasst die Benachrichtigung an die Teilnehmerstationen der Teilnehmer - wie oben ausgeführt-zumindest teilweise eine Aufforderung zu einer Antwort, d.h. zumindest einige Teilnehmerstationen bzw. eine oder mehrere Gruppen von Teilnehmerstationen erhalten eine Aufforderung zu einer Antwort. In Ausgestaltung der Erfindung umfasst dabei die Benachrichtigung an die Teilnehmerstationen der Teilnehmer entweder eine Aufforderung zu einer Antwort oder eine Information, dass keine Antwort erforderlich ist, wobei im letztgenannten Fall die Übertragung der Nutzinformationen unabhängig von einer Antwort erfolgt.

Hierbei wird beispielsweise in Funkzellen, die einen Hotspot versorgen, auf eine Aufforderung zu einer Antwort verzichtet, weil aufgrund der z.B. hohen Dichte bzw. großen Anzahl der Teilnehmerstationen es sehr wahrscheinlich ist, dass mindestens ein den angebotenen MBMS-Dienst nutzender Teilnehmer vorhanden ist. Dadurch, dass in diesem Fall keine Aufforderung zu einer Antwort ergeht, werden nicht nur Funkressourcen gespart, sondern es können auch unnötige Verzögerungen bei der Übertragung von MBMS-Diensten vermieden werden. Es können Überlastsituationen beim Zugriff auf gemeinsam genutzte Ressourcen im Uplink beispielsweise im Falle einer großen Zahl von MBMS-Dienste nutzenden Teilnehmern in einer Funkzelle wirksam vermieden werden, die gerade ja dann eintreten würden, wenn eine sehr große Zahl von Teilnehmern zu einer Antwort aufgefordert werden würde.

Den Teilnehmerstationen bzw. den Gruppen der Teilnehmerstationen wird über ein entsprechendes Infromationsfeld in der Benachrichtigung mitgeteilt, obsie eine Antwort abgeben sollen oder nicht. Die Aufforderung zu einer Antwort (RESP) oder die Information, dass keine Antwort erforderlich ist, kann in Form eines Bits (z.B. "response"bit) übertragen werden.

In Weiterbildung der Erfindung wird in Abhängigkeit von mindestens einem Entscheidungskriterium festgelegt, ob von der Funknetzwerkkontrolleinrichtung eine Benachrichtigung mit Aufforderung zu einer Antwort oder mit der Information, dass keine Antwort erforderlich ist, an die Gruppen von Teilnehmerstationen der Teilnehmer übertragen wird. Die Festlegung erfolgt dabei vorzugsweise in der Funknetzwerkkontrolleinrichtung.

Es kann grundsätzlich ein statisches und/oder ein dynamisches, in jedem Fall jedoch ein funknetzwerkspezifisches Entscheidungskriterium verwendet werden. Die Entscheidung, ob eine Benachrichtigung mit Aufforderung zu einer Antwort oder mit der Information, dass keine Antwort erforderlich ist, erfolgt, kann entsprechend an die statischen und dynamischen Bedingungen beispielsweise in einer Funkzelle angepasst werden.

Das Entscheidungskriterium kann beispielsweise die Konfiguration des Funknetzwerks, funknetzwerkseitig vorhandene Kenntnisse über Teilnehmer, die Auslastung der Funkressourcen (z.B. eine große Zahl von Teilnehmern, welche die gemeinsame Ressource im Uplink nutzen) im Funknetzwerks oder in Bereichen desselben, spezifische Eigenschaften des Dienstes (z.B. Häufigkeit und Dauer der Übertragung) oder eine Kombination der vorgenannten Möglichkeiten berücksichtigen. Informationen zur Konfiguration können hierbei beispielsweise vom Betriebs- und Wartungszentrum (OMC Operation and Maintanance Centre) geliefert werden.

In Ausgestaltung der Erfindung werden die Antworten der Teilnehmerstationen der Teilnehmer, welche zu einer Antwort aufgefordert worden sind, insbesondere die Antworten der Teilnehmerstationen innerhalb einer Gruppe von Teilnehmerstationen, nicht zeitgleich übertragen. Auch diese Maßnahme trägt wirksam zu einer zeitlich verteilten Nutzung von Funkressourcen bei.

Die Antworten der Teilnehmerstationen der Teilnehmer, welche zu einer Antwort aufgefordert worden sind, insbesondere die Antworten der Teilnehmerstationen einer Gruppe, können im Hinblick auf den Zeitpunkt der Übertragung zufällig oder vorzugsweise geregelt übertragen werden.

Mit Vorteil kann die Übertragung der Nutzinformationen für eine Gruppe nach Eingang der Antwort von mindestens einer Teilnehmerstation der Gruppe erfolgen. Dies verhindert zum einen Verzögerungen und spart zum anderen Funkressourcen. Denn im Zusammenhang mit der Anforderung von zeitlich gespreizten Antworten der Teilnehmerstationen können die Teilnehmerstationen, welche nach dem Eingang einer Antwort einer ersten Teilnehmerstation ihre Antwort übertragen wollen, beispielsweise mit dem Beginn der Übertragung der Nutzinformationen des Dienstes mitgeteilt bekommen bzw. aufgrund des Beginns der Übertragung der Nutzinformationen des Dienstes erkennen, dass eine Antwort nicht mehr erforderlich ist.

Beim erfindungsgemäßen Funkkommunikationssystem sind Mittel vorhanden, so dass die Benachrichtigung an die Teilnehmerstationen der Teilnehmer zumindest teilweise eine Aufforderung zu einer Antwort umfasst und dass zumindest teilweise die Übertragung der Nutzinformationen nach Eingang der Antwort erfolgt.

Das Funkkommunikationssystem kann Mittel aufweisen, so dass an Gruppen von Teilnehmerstationen der Teilnehmer eine Benachrichtigung gesendet wird.

Es können Mittel zur Festlegung in Abhängigkeit von mindestens einem Entscheidungskriterium vorgesehen sein, ob von der Funknetzwerkkontrolleinrichtung eine Benachrichtigung mit Aufforderung zu einer Antwort oder mit der Information, dass keine Antwort erforderlich ist, an eine Gruppe von Teilnehmerstationen der Teilnehmer übertragen wird. Diese Mittel befinden sich vorzugsweise in der Funknetzwerkkontrolleinrichtung (RNC). Die Funknetzwerkkontrolleinrichtung dann beispielsweise um eine Funktion erweitert, die auswertet, ob beispielsweise aufgrund der spezifischen Konfiguration einer Funkzelle eine Antwort angefordert werden soll oder nicht.

Das beschriebene Funkkommunikationssystem eignet sich insbesondere zur Durchführung des erfindungsgemäßen Verfahrens. Im Funkkommunikationssystem bzw. seinen einzelnen Bestandteilen können jeweils entsprechende Mittel und Einrichtungen zur Durchführung des Verfahrens und seiner Ausgestaltungen und Weiterbildungen vorhanden sein.

Nachfolgend soll die Erfindung anhand von Ausführungsbeispielen und zwei Figuren näher erläutert werden.

Hierbei zeigen:
- Fig. 1:: eine schematische Darstellung eines erfindungsgemäßen Funkkommunikationsnetzes,
- Fig. 2:: eine schematische Darstellung eines Ablaufdiagramms zur der erfindungsgemäßen Übertragung zwischen Kernnetz, Funknetzwerkkontrolleinrichtung, Basisstation und Teilnehmerstation.

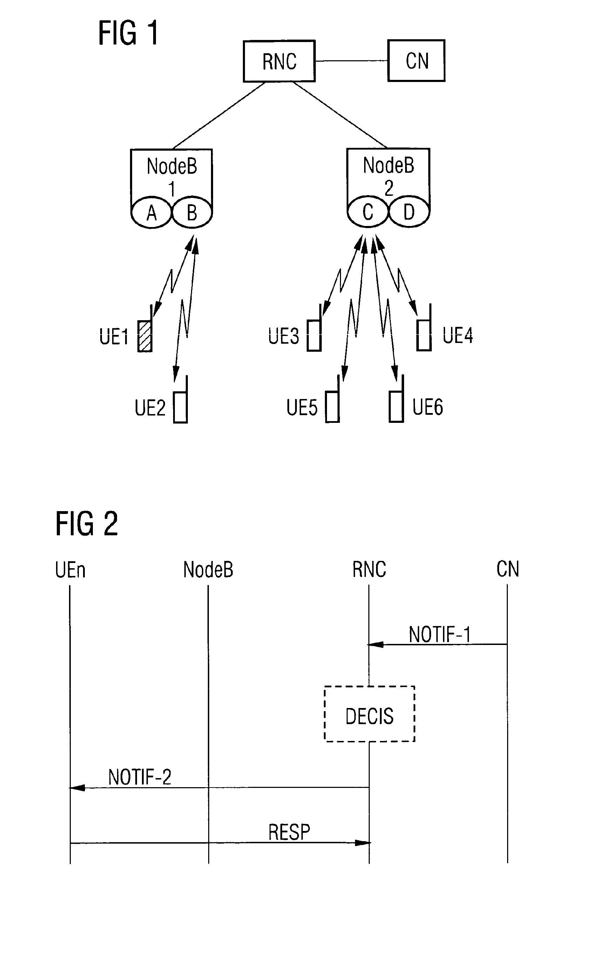

Fig. 1 zeigt eine schematische Darstellung eines Funkkommunikationsnetzes für eine erfindungsgemäße Übertragung zwischen einer Funknetzwerkkontrolleinrichtung RNC, zwei Basisstationen NodeB1 und NodeB2 und mobilen Teilnehmerstationen UE1, UE2, UE3, UE4, UE5 und UE6.

Die Funknetzwerkkontrolleinrichtung RNC ist einerseits mit einer Zugangseinrichtung eines Kernnetzes CN und andererseits mit den zwei Basisstationen NodeB1 und NodeB2 verbunden. Basisstation NodeB1 bedient die Funkzellen A und B und Basisstationen NodeB2 die Funkzellen C und D. In der Funkzelle B befinden sich die Teilnehmerstationen UE1 und UE2. Die Teilnehmerstationen UE3, UE4, UE5 und UE6 sind der Funkzelle C zugeordnet.

In der Funkzelle B der Basisstation NodeB1 soll ein MBMS-Dienst, der beispielsweise über einen Gruppenkontrollkanal von der Funknetzwerkkontrolleinrichtung RNC über die Funkzelle B über die Funkkommunikations-Schnittstelle signalisiert werden kann, von der mobilen Teilnehmerstation UE2 empfangen werden. Die Benachrichtigung in der Funkzelle B umfasst eine Aufforderung zu einer Antwort. Teilnehmerstation UE1 ist derzeit nicht an der Nutzung einen MBMS-Dienstes interessiert. Nachdem die Teilnehmerstationen UE2 die Aufforderung in der Benachrichtigung durch Absenden einer Antwort erwidert hat, beginnt in der Funkzelle B die Übertagung der Nutzinformationen des Dienstes. Die Nutzinformationen des Dienstes werden dabei beispielsweise über einen Verkehrskanal übertragen.

In der Funkzelle C soll ebenfalls ein MBMS-Dienst übertragen werden. Funkzelle C versorgt beispielsweise einen potentiellen Hotspot. Aufgrund dieser Kenntnis wird in der Funknetzwerkkontrolleinrichtung RNC auf eine Aufforderung zu einer Antwort innerhalb der Funkzelle C verzichtet, da hier mit einer größeren Zahl an Nutzern des MBMS-Dienstes gerechnet wird. Ohne Verzögerung wird daher in der Funkzelle C zur Basisstation NodeB2 über die Funkkommunikations-Schnittstelle Nutzinformationen des MBMS-Dienstes übertragen und von den mobilen Teilnehmerstationen UE3, UE4, UE5 und UE6 Im gezeigten Fall erfolgte eine Gruppierung der Teilnehmerstationen anhand deren Zuordnung zu den Funkzellen.

In den Funkzellen A und D sind keine Teilnehmerstationen gezeigt.

In Fig. 2 ist eine schematische Darstellung eines Ablaufdiagramms zur der erfindungsgemäßen Übertragung zwischen Kernnetz CN, Funknetzwerkkontrolleinrichtung RNC, Basisstation NodeB und Teilnehmerstation UEn gezeigt.

Über eine Zugangseinrichtung des Kernnetzes CN erhält die Funknetzwerkkontrolleinrichtung RNC die Nachricht NOTIF-1, dass Nutzinformationen eines MBMS-Dienstes Teilnehmerstationen UEn zur Verfügung gestellt werden sollen.

Unter Bezugnahme auf das im Zusammenhang mit Fig. 1 beschriebene Ausführungsbeispiel soll der MBMS-Dienst beispielsweise der Teilnehmerstation UE2 in der Funkzelle B des NodeB1 und den Teilnehmerstationen UE3, UE4, UE5 und UE6 in der Funkzelle C des NodeB2 aus Fig. 1 zugänglich gemacht werden. Die Funknetzwerkkontrolleinrichtung RNC trifft dabei die Entscheidung DECIS, dass die Benachrichtigung NOTIF-2 an die Teilnehmerstation UE2 eine Aufforderung zu einer Antwort RESP enthält und die Benachrichtigung NOTIF-2 an die Teilnehmerstation UE3 bis UE6 eine Information, dass keine Antwort erforderlich ist, umfasst. In der Funkzelle B der Basisstation NodeB1 erfolgt dann eine Übertragung der Nutzinformationen des MBMS-Dienstes nach Eingang der Antwort RESP. In der Funkzelle C der Basisstation NodeB2 erfolgt die Übertragung der Nutzinformationen unabhängig von einer Antwort RESP.

## Patentansprüche

1. Verfahren zur Übertragung von Nutzinformationen in einem Funkkommunikationssystem mit mindestens einer Funknetzwerkkontrolleinrichtung (RNC), mindestens einer Basisstation (NodeB1, NodeB2) und mindestens einer Teilnehmerstation (UE1 ... UE6),
wobei die mindestens eine Basisstation (NodeB1, NodeB2) und die jede Teilnehmerstation (UE1 ... UE6) über eine Funkkommunikations-Schnittstelle miteinander verbunden sind,
wobei die Funknetzwerkkontrolleinrichtung (RNC) mit einer Zugangseinrichtung eines Kernnetzes (CN) verbunden ist,
wobei die Nutzinformationen als Dienst mehreren Teilnehmern zur Verfügung gestellt werden,
wobei die Teilnehmerstationen (UE2 ... UE6) dieser Teilnehmer vor der Übertragung der Nutzinformationen des Dienstes benachrichtigt werden,
**dadurch gekennzeichnet,**
**dass** die Benachrichtigung (NOTIF-2) an die Teilnehmerstationen (UE2 ... UE6) der Teilnehmer zumindest teilweise eine Aufforderung zu einer Antwort (RESP) umfasst und dass zumindest teilweise die Übertragung der Nutzinformationen nach Eingang der Antwort (RESP) erfolgt.

2. Verfahren nach Anspruch 1,
**dadurch gekennzeichnet,**
**dass** eine Gruppierung der Teilnehmerstationen (UE3 ... UE6) zu Gruppen im Hinblick auf die Benachrichtigung (NOTIF-2) erfolgt.

3. Verfahren nach Anspruch 2,
**dadurch gekennzeichnet,**
**dass** die Gruppierung der Teilnehmerstationen (UE3 ... UE6) anhand deren Zuordnung zu Funkzellen (A, B, C, D) erfolgt.

4. Verfahren nach Anspruch 1, 2 oder 3,
**dadurch gekennzeichnet,**
**dass** die Benachrichtigung (NOTIF-2) an die Teilnehmerstationen (UE2 ... UE6) der Teilnehmer entweder eine Aufforderung zu einer Antwort (RESP) oder eine Information, dass keine Antwort erforderlich ist, umfasst, wobei im letztgenannten Fall die Übertragung der Nutzinformationen unabhängig von einer Antwort (RESP) erfolgt.

5. Verfahren nach einem der Ansprüche 2 bis 4,
**dadurch gekennzeichnet,**
**dass** in Abhängigkeit von mindestens einem Entscheidungskriterium (DECIS) festgelegt wird, ob von der Funknetzwerkkontrolleinrichtung (RNC) eine Benachrichtigung (NOTIF-2) mit Aufforderung zu einer Antwort (RESP) oder mit der Information, dass keine Antwort erforderlich ist, an die Gruppen von Teilnehmerstationen (UE3 ... UE6) der Teilnehmer übertragen wird.

6. Verfahren nach Anspruch 5,
**dadurch gekennzeichnet,**
**dass** ein statisches oder dynamisches, funknetzwerkspezifisches Entscheidungskriterium (DECIS) verwendet wird.

7. Verfahren nach Anspruch 5 oder 6,
**dadurch gekennzeichnet,**
**dass** das Entscheidungskriterium (DECIS) die Konfiguration des Funknetzwerks, funknetzwerkseitig vorhandene Kenntnisse über Teilnehmer, die Auslastung der Funkressourcen im Funknetzwerks oder in Bereichen desselben, spezifische Eigenschaften des Dienstes oder eine Kombination der vorgenannten Möglichkeiten berücksichtigt.

8. Verfahren nach einem der Ansprüche 1 bis 7,
**dadurch gekennzeichnet,**
**dass** die Antworten (RESP) der Teilnehmerstationen (UE2 ... UE6) der Teilnehmer, welche zu einer Antwort (RESP) aufgefordert worden sind, insbesondere die Antworten (RESP) der Teilnehmerstationen (UE3 ... UE6) innerhalb einer Gruppe von Teilnehmerstationen (UE3 ... UE6) der Teilnehmer, nicht zeitgleich übertragen werden.

9. Verfahren nach Anspruch 8,
**dadurch gekennzeichnet,**
**dass** die Antworten (RESP) der Teilnehmerstationen (UE2 ... UE6) der Teilnehmer, welche zu einer Antwort (RESP) aufgefordert worden sind, insbesondere die Antworten (RESP) der Teilnehmerstationen (UE3 ... UE6) einer Gruppe von Teilnehmerstationen (UE3 ... UE6) der Teilnehmer, im Hinblick auf den Zeitpunkt der Übertragung zufällig oder vorzugsweise geregelt übertragen werden.

10. Verfahren nach einem der Ansprüche 2 bis 9,
**dadurch gekennzeichnet,**
**dass** die Übertragung der Nutzinformationen für eine Gruppe nach Eingang der Antwort (RESP) von mindestens einer Teilnehmerstation (UE3 ... UE6) der Gruppe erfolgt.

11. Funkkommunikationssystem zur Übertragung von Nutzinformationen als Dienst an mehrere Teilnehmerstationen (UE2 ... UE6) umfassend mindestens eine Funknetzwerkkontrolleinrichtung (RNC), mindestens eine Basisstation (NodeB1, NodeB2) und Teilnehmerstationen (UE1 ... UE6),
wobei die mindestens eine Basisstation (NodeB1, NodeB2) und die jede Teilnehmerstation (UE1 ... UE6) über eine Funkkommunikations-Schnittstelle miteinander verbunden sind,
wobei die Funknetzwerkkontrolleinrichtung (RNC) mit einer Zugangseinrichtung eines Kernnetzes (CN) verbunden ist,
wobei die Nutzinformationen als Dienst mehreren Teilnehmern zur Verfügung gestellt werden,
wobei Mittel zur Benachrichtigung der Teilnehmerstationen (UE2 ... UE6) dieser Teilnehmer vor der Übertragung der Nutzinformationen des Dienstes vorgesehen sind,
**dadurch gekennzeichnet,**
**dass** Mittel vorhanden sind, so dass die Benachrichtigung (NOTIF-2) an die Teilnehmerstationen (UE2 ... UE6) der Teilnehmer zumindest teilweise eine Aufforderung zu einer Antwort (RESP) umfasst und dass zumindest teilweise die Übertragung der Nutzinformationen nach Eingang der Antwort (RESP) erfolgt.

12. Funkkommunikationssystem nach Anspruch 11,
**dadurch gekennzeichnet,**
**dass** das Funkkommunikationssystem Mittel aufweist, so dass an Gruppen von Teilnehmerstationen (UE3 ... UE6) der Teilnehmer eine Benachrichtigung (NOTIF-2) gesendet wird.

13. Funkkommunikationssystem nach Anspruch 11 oder 12,
**dadurch gekennzeichnet,**
**dass** - vorzugsweise in der Funknetzwerkkontrolleinrichtung (RNC) - Mittel zur Festlegung in Abhängigkeit von mindestens einem Entscheidungskriterium (DECIS) vorgesehen sind, ob von der Funknetzwerkkontrolleinrichtung (RNC) eine Benachrichtigung (NOTIF-2) mit Aufforderung zu einer Antwort (RESP) oder mit der Information, dass keine Antwort erforderlich ist, an eine Gruppe von Teilnehmerstationen (UE3 ... UE6) der Teilnehmer übertragen wird.
